# FASCICULE DE BREVET EUROPEEN

(11) **EP 1 247 739 B1**
(45) Date de publication et mention de la délivrance du brevet: **13.07.2005**
(21) Numéro de dépôt: 02290832.1
(22) Date de dépôt: 04.04.2002
(51) Int. Cl.: B64D 13/08, B64D 13/02

(54) **Dispositif d'alimentation en air frais d'un aéronef**
Frischlufteinlassvorrichtung eines Luftfahrzeuges
Aircraft fresh air intake device

(30) Priorité: 06.04.2001 FR 0104687
(43) Date de publication de la demande: 09.10.2002
(73) Titulaire: DASSAULT AVIATION, F-75008 Paris (FR)
(72) Inventeur: Laügt, Paul, 33127 Martignas (FR)
(74) Mandataire: Colas, Jean-Pierre

(56) Documents cités:
- GB-A- 1 436 697
- US-A- 2 721 456
- US-A- 3 752 422
- US-A- 4 312 191
- US-A- 4 840 036
- DATABASE WPI Week 199648 Derwent Publications Ltd., London, GB; AN 1996-483988 XP002184651 & SU 594 676 A (DMITRIEV Y G), 27 mars 1996 (1996-03-27)

## Description

La présente invention est relative à un dispositif d'alimentation en air frais d'un aéronef, par de l'air rafraîchi dans au moins un échangeur balayé par un courant d'air extérieur prélevé au niveau d'une entrée d'air statique de l'aéronef.

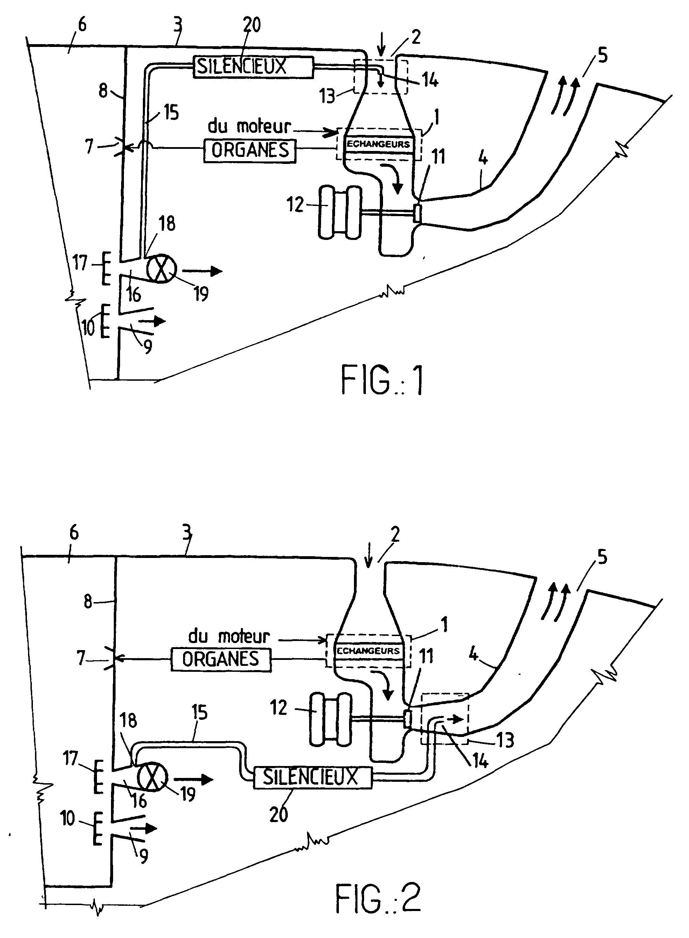

Comme représenté à la figure 1 du dessin annexé, un tel dispositif comprend, de manière connue, un ou plusieurs échangeurs, référencés 1, alimentés par de l'air prélevé, par exemple, sur un étage d'un compresseur d'un moteur à réaction propulsant l'aéronef. Cet air est rafraîchi par un balayage de l'échangeur avec de l'air extérieur prélevé au niveau d'une entrée d'air 2 formée sur la paroi externe 3 de l'aéronef. L'air extérieur traverse un conduit 4 et revient à l'extérieur par une sortie 5 de ce conduit, également formée sur le fuselage 3.

L'air refroidi dans les échangeurs 1 passe dans divers organes, turbines, séparateur d'eau, etc..., et est soufflé dans la cabine 6 de l'aéronef, par exemple, par une entrée d'air frais 7 ménagée dans une paroi 8 de cette cabine.

Cette paroi est aussi traversée par une sortie 9 d'air de cabine équipée d'au moins une soupape de pressurisation 10 grâce à laquelle on régule la pression d'air de la cabine à une valeur de consigne prédéterminée, couramment de l'ordre de 700 à 900 mb, en vol de croisière.

Un dispositif de ce type est connu, notamment de la demande de brevet français N° 99 14147 déposée le 10 novembre 1999 par la demanderesse, demande à laquelle on pourra se référer pour plus de détails concernant l'agencement des échangeurs et de leurs équipements associés.

Dans les dispositifs de ce type un problème essentiel à résoudre est celui de la ventilation des échangeurs, c'est-à-dire de la circulation de l'air extérieur dans le conduit 4. Pour ce faire on peut utiliser un ventilateur 11 placé dans le conduit 4, en aval des échangeurs, comme représenté à la figure 1, et animé par un moteur électrique 12 ou une turbo-machine.

Cette solution peut être envisagée en combinaison avec une entrée d'air 2 "statique" comme celle représentée à la figure 1, sensiblement tangente à la trajectoire de l'aéronef, ou "dynamique" comme l'est celle du dispositif décrit dans la demande de brevet précitée, s'ouvrant vers l'avant de l'aéronef de manière que l'air extérieur s'engouffre dans cette entrée.

Les dispositifs à entrée d'air dynamique, tels que celui décrit dans le brevet US 3,752,422, présentent l'inconvénient de ne fonctionner que lorsque l'aéronef progresse à une vitesse suffisante. Il est donc indispensable de les équiper d'un ventilateur assurant la circulation de l'air dans le conduit quand l'aéronef progresse à basse vitesse ou se trouve au sol. Une entrée d'air dynamique accroît en outre la traînée de l'aéronef et exige la présence de moyens d'antigivrage. La forme de cette entrée est très complexe et exige de nombreuses, et coûteuses, heures de fabrication.

Les dispositifs à entrée d'air statique, comme celui décrit ci-dessus en liaison avec la figure 1, présentent l'inconvénient d'être insuffisants à haute altitude, si le ventilateur est dimensionné pour fonctionner avec de l'air de densité normale, à basse altitude ou au sol. En effet la densité de l'air à haute altitude étant très faible, le ventilateur ne peut alors assurer un débit d'air suffisant pour rafraîchir efficacement l'air à souffler dans la cabine. On peut alors songer à équiper le dispositif de deux ventilateurs dimensionnés pour ventiler les échangeurs à haute altitude et à basse altitude, respectivement, solution évidemment coûteuse.

On peut encore penser à assurer la ventilation des échangeurs à l'aide d'une trompe alimentée par de l'air prélevé sur un circuit d'air, entre une source (moteur ou groupe auxiliaire) et la cabine, mais cette solution accroît l'énergie consommée par cette source et n'est donc pas économique non plus.

La présente invention a donc pour but de réaliser un dispositif d'alimentation en air frais d'un aéronef qui ne présente pas les inconvénients mentionnés ci-dessus des dispositifs de la technique antérieure et qui, en particulier, soit économique en énergie et en coût de réalisation.

On atteint ce but de la présente invention, ainsi que d'autres qui apparaîtront à la lecture de la description qui va suivre, avec un dispositif d'alimentation en air frais d'un aéronef, par de l'air rafraîchi dans au moins un échangeur balayé par un courant d'air extérieur prélevé au niveau d'une entrée d'air statique de l'aéronef, ce dispositif étant remarquable en ce qu'il comprend des moyens de trompe pour assurer la circulation dudit air extérieur dans ledit échangeur, lesdits moyens de trompe comprenant un injecteur alimenté par de l'air d'une cabine de l'aéronef, prélevé sur une sortie dudit air prévue sur ladite cabine.

Comme on le verra plus loin en détail ces moyens de trompe, ainsi alimentés, permettent de se passer d'une entrée d'air dynamique et des coûteux équipements associés, ou d'un ventilateur supplémentaire dimensionné pour la haute altitude, tout en récupérant de l'énergie venue de l'air de cabine, soit donc en réduisant la consommation d'énergie de l'aéronef.

Selon d'autres caractéristiques du dispositif suivant la présente invention :
- l'échangeur et les moyens de trompe sont installés en série dans un même conduit d'air extérieur passant dans ledit aéronef, depuis ladite entrée d'air statique jusqu'à une sortie vers l'extérieur,
- les moyens de trompe sont disposés en amont dudit échangeur ou en aval de celui-ci,
- la sortie d'air de cabine est équipée d'un moyen de vanne mobile entre une position de fermeture dans laquelle l'air de cabine traversant la sortie passe entièrement dans les moyens de trompe et une position d'ouverture dans laquelle ledit air passe à l'extérieur.

D'autres caractéristiques et avantages de la présente invention apparaîtront à la lecture de la description qui va suivre et à l'examen du dessin annexé dans lequel :
- la figure 1 est une vue schématique d'un premier mode de réalisation du dispositif suivant la présente invention, déjà partiellement décrit en préambule de la présente description, et
- la figure 2 est une vue analogue à celle de la figure 1, d'un deuxième mode de réalisation de ce dispositif.

On se réfère à la figure 1 du dessin annexé où il apparaît que, suivant la présente invention, le dispositif représenté comprend, outre les organes décrits ci-dessus, des moyens de trompe 13 constitués par une section du conduit 4 sur l'axe de laquelle est disposé un injecteur d'air 14. Dans le mode de réalisation de la figure 1 ces moyens 13 sont disposés dans le conduit 4, en série avec les échangeurs 1 et en amont de ceux-ci, la sortie de l'injecteur 14 étant orientée vers les échangeurs.

L'injecteur 14 est alimenté en air par une canalisation 15 branchée, suivant l'invention, sur une sortie 16 d'air de cabine. Cette sortie 16 est équipée, comme la sortie 9, d'une soupape de pressurisation 17. Elle comprend en outre, en aval du raccordement 18 de la canalisation 15 à cette sortie, un moyen de vanne constitué, par exemple, par un robinet 19 dont on commande l'ouverture ou la fermeture par des moyens de manoeuvre adaptés (non représentés).

Le fonctionnement du dispositif de la figure 1 s'établit alors comme suit. Quand l'aéronef est au sol ou à basse altitude, le moteur 12 est activé pour faire tourner le ventilateur 11 qui assure alors la circulation d'air extérieur dans le conduit 4, pour rafraîchir, dans les échangeurs 1, l'air venu du moteur de l'aéronef, qui est finalement soufflé dans la cabine 6, en tant qu'air frais.

Le robinet 19 est alors ouvert et la pression d'air de cabine est régulée par les soupapes de pressurisation 10 et 17.

A haute altitude, le ventilateur 11 devient sensiblement inopérant car dimensionné pour fonctionner à basse altitude. Le dispositif commande alors la fermeture du robinet 19, ce qui active automatiquement la trompe 13 dont l'injecteur 14 est alors alimenté par l'air de cabine passant dans la sortie 16. Le courant d'air ainsi injecté dans le conduit 4, provoque une circulation forcée d'air extérieur dans ce conduit, depuis l'entrée statique 2 jusqu'à la sortie 5 du conduit, cet air passant alors sur les échangeurs 1 pour rafraîchir l'air venu du moteur de l'aéronef, injecté en 7 dans la cabine 6.

L'air sortant de la cabine à la sortie 16 passe d'abord dans la soupape 17 qui règle la section de passage nécessaire à la pressurisation de la cabine. Il passe ensuite dans le conduit 15, avantageusement équipé d'un silencieux 20, avant de se détendre à la sortie de l'injecteur 14 de la trompe 13.

Du fait de la forte différence de pression de l'air entre la cabine et l'extérieur, la détente de l'air de cabine dans l'injecteur 14 de la trompe 13 est très énergétique et propre à assurer une ventilation convenable des échangeurs 1.

Dans le dispositif de la figure 1, les moyens de trompe 13 sont disposés en amont des échangeurs. Ces moyens peuvent aussi être disposés en aval de ceux-ci et du ventilateur 11, comme représenté à la figure 2 du dessin annexé, qui illustre un autre mode de réalisation de l'invention, par ailleurs identique à celui de la figure 1 (sur les deux figures, une même référence numérique désigne des organes identiques ou similaires). Les moyens de trompe pourraient aussi être installés entre les échangeurs 1 et le ventilateur 11. En plaçant les moyens de trompe en amont des échangeurs, comme représenté à la figure 1, l'air débité par l'injecteur 14 participe au refroidissement des échangeurs, ce qui permet de diminuer le débit de l'air extérieur absorbé par l'entrée statique 2.

Par contre on risque ainsi de provoquer un givrage des échangeurs du fait de l'humidité transportée par l'air de cabine.

On évite cet inconvénient, suivant l'invention, en plaçant des moyens de trompe en aval des échangeurs, ou du moins du premier d'entre eux. Cette disposition est de surcroît avantageuse, en terme d'efficacité, du fait qu'à haute altitude, il est préférable de ventiler ce premier échangeur avec de l'air extérieur, de faible débit mais très froid, plutôt qu'avec un mélange d'air externe et d'air de cabine, au débit plus important mais plus chaud.

Il apparaît maintenant que l'invention permet bien d'atteindre les objectifs annoncés, notamment du point de vue économique, du fait que le dispositif suivant l'invention se passe d'une entrée d'air dynamique ou du deuxième ventilateur nécessaire pour assurer la circulation d'air extérieur dans le conduit 4, à haute altitude.

Il se passe aussi d'un prélèvement d'air supplémentaire sur les moteurs de l'aéronef pour l'alimentation d'une trompe puisque, suivant l'invention, la trompe 14 est alimentée par l'air de cabine, dont la détente fournit l'énergie nécessaire à la mise en circulation de l'air extérieur dans le conduit 4.

Il en résulte une économie sur l'énergie à fournir au moteur, qui s'ajoute à celle qui résulte de la réduction de la traînée de l'aéronef, obtenue par l'utilisation d'une entrée d'air statique et non dynamique. Cette économie se combine avec la réduction des coûts de fabrication tirée de l'utilisation d'une entrée statique, ou de la suppression d'un ventilateur pour le fonctionnement en haute altitude.

Le silencieux 20 permet de réduire le bruit du à la détente de l'air de cabine.

Bien entendu l'invention n'est pas limitée aux modes de réalisation décrits et représentés qui n'ont été donnés qu'à titre d'exemple. C'est ainsi que les moyens de trompe pourraient comprendre une pluralité d'injecteurs ou un "multi-injecteur" permettant d'assurer une diffusion plus complète de l'air injecté dans l'air extérieur, en particulier quand la longueur de la section du conduit dans laquelle ils sont installés n'est pas suffisante pour permettre à elle seule cette diffusion. C'est ainsi encore que l'invention peut s'appliquer au conditionnement d'air d'un compartiment de l'aéronef autre que la cabine réservée aux passagers, par exemple à un compartiment contenant du matériel électronique sensible à la température.

## Revendications

1. Dispositif d'alimentation en air frais d'un aéronef, par de l'air rafraîchi dans au moins un échangeur (1) balayé par un courant d'air extérieur, comprenant des moyens de trompe (13) pour assurer la circulation dudit air extérieur dans ledit échangeur (1), lesdits moyens de trompe (13) comprenant un injecteur (14) alimenté par de l'air d'une cabine (6) de l'aéronef prélevé sur une sortie (16) dudit air prévue sur ladite cabine (6), et **caracterisé en ce que** ledit air extérieur est prélevé au niveau d'une entrée d'air statique (2) de l'aéronef.

2. Dispositif conforme à la revendication 1, **caractérisé en ce que** ledit échangeur (1) et lesdits moyens de trompe (13) sont installés en série dans un même conduit d'air (4) extérieur passant dans ledit aéronef, depuis ladite entrée d'air statique (2) jusqu'à une sortie (5) vers l'extérieur.

3. Dispositif conforme la revendication 2, **caractérisé en ce que** lesdits moyens de trompe (13) sont disposés en amont dudit échangeur (1).

4. Dispositif conforme à la revendication 2, **caractérisé en ce que** lesdits moyens de trompe (13) sont disposés en aval dudit échangeur (1).

5. Dispositif conforme à l'une quelconque des revendications 1 à 4, **caractérisé en ce que** ladite sortie (16) d'air de cabine est équipé d'un moyen de vanne (19) mobile entre une position de fermeture dans laquelle l'air de cabine traversant la sortie (16) passe entièrement dans lesdits moyens de trompe (13) et une position d'ouverture dans laquelle ledit air passe à l'extérieur.

6. Dispositif conforme à la revendication 5, **caractérisé en ce que** ladite sortie (16) de cabine est équipée en outre d'une soupape de surpression (17).

7. Dispositif conforme à la revendication 6, **caractérisé en ce qu'**une deuxième sortie d'air (9) est prévue sur ladite cabine (6), également équipée d'une soupape de surpression (10).

8. Dispositif conforme à l'une quelconque des revendications 1 à 7, **caractérisé en ce que** lesdits moyens de trompe (13) sont alimentés en air de cabine par une canalisation (15) équipée d'un silencieux (20).

9. Dispositif conforme à l'une quelconque des revendications 5 et 6, **caractérisé en ce qu'**il comprend des moyens pour fermer ledit moyen de vanne (19) quand l'aéronef vole à haute altitude, de manière à activer lesdits moyens de trompe (13).

10. Dispositif conforme à l'une quelconque des revendications 1 à 9, **caractérisé en ce qu'**il comprend en outre des moyens de ventilation (11, 12) pour assurer la circulation de l'air extérieur dans l'échangeur (1) quand l'aéronef vole à basse altitude ou se trouve au sol.

11. Dispositif conforme à l'une quelconque des revendications 1 à 10, **caractérisé en ce que** lesdits moyens de trompe (13) comprennent une pluralité d'injecteurs d'air de cabine.

12. Dispositif conforme à l'une quelconque des revendications précédentes, **caractérisé en ce que** l'air frais produit alimente une entrée d'air frais (7) de ladite cabine.

## Patentansprüche

1. Vorrichtung zur Frischluftversorgung eines Luftfahrzeuges durch Luft, die in mindestens einem Tauscher (1) gekühlt wird, der durch einen Außenluftstrom gespült wird, umfassend Düseneinrichtungen (13) zur Sicherstellung der Zirkulation der Außenluft im Tauscher (1), wobei diese Düseneinrichtungen (13) eine Austrittsdüse (14) umfassen, die durch die Luft aus der Kabine (6) des Luftfahrzeuges gespeist wird, die an einem Abnahmepunkt (16) dieser Luft, der in der Kabine (6) vorgesehen ist, abgenommen wird, wobei die Vorrichtung des Weiteren **dadurch gekennzeichnet ist, dass** die Außenluft im Bereich eines statisches Lufteinlasses (2) am Luftfahrzeug abgenommen wird.

2. Vorrichtung nach Anspruch 1, **dadurch gekennzeichnet, dass** der Tauscher (1) und die Düseneinrichtungen (13) hintereinander in demselben Kanal, durch den die Außenluft strömt, installiert sind, der vom statischen Lufteineinlass (2) bis zu einem Auslass (5) nach außen durch das Luftfahrzeug (4) führt.

3. Vorrichtung nach Anspruch 2, **dadurch gekennzeichnet, dass** die Düseneinrichtungen (13) dem Tauscher (1) vorgeschaltet sind.

4. Vorrichtung nach Anspruch 2, **dadurch gekennzeichnet, dass** die Düseneinrichtungen (13) dem Tauscher (1) nachgeschaltet sind.

5. Vorrichtung nach einem der Ansprüche 1 bis 4, **dadurch gekennzeichnet, dass** der Luftauslass (16) aus der Kabine mit einer Schiebereinrichtung (19) versehen ist, bei der zwischen einer geschlossenen Position, bei der die Kabinenluft, die durch den Auslass (16) strömt, vollständig durch die Düseneinrichtungen (13) gefuhrt wird, und einer geöffneten Position, bei der die Luft nach außen austritt, gewählt werden kann.

6. Vorrichtung nach Anspruch 5, **dadurch gekennzeichnet, dass** der Auslass (16) aus der Kabine darüber hinaus mit einem Überdruckventil (17) versehen ist.

7. Vorrichtung nach Anspruch 6, **dadurch gekennzeichnet, dass** ein zweiter Luftauslass (9) in der Kabine (6) vorgesehen ist, der ebenfalls mit einem Überdruckventil (10) versehen ist.

8. Vorrichtung nach einem der Ansprüche 1 bis 7, **dadurch gekennzeichnet, dass** die Düseneinrichtungen (13) über eine Leitung (15), die mit einen Schalldämpfer (20) versehen ist, mit Kabinenluft versorgt werden.

9. Vorrichtung nach einem der Ansprüche 5 und 6, **dadurch gekennzeichnet, dass** sie Mittel umfasst, um die Schiebereinrichtung (19) zu schließen, wenn das Luftfahrzeug in einer großen Flughöhe fliegt, so dass die Düseneinrichtungen (13) aktiviert werden.

10. Vorrichtung nach einem der Ansprüche 1 bis 9, **dadurch gekennzeichnet, dass** sie darüber hinaus Belüftungsmittel (11, 12) umfasst, um die Zirkulation der Außenluft im Tauscher (1) sicherzustellen, wenn das Luftfahrzeug in geringer Flughöhe fliegt oder sich am Boden befindet.

11. Vorrichtung nach einem der Ansprüche 1 bis 10, **dadurch gekennzeichnet, dass** die Düseneinrichtungen (13) mehrere Düsen für Kabinenluft umfassen.

12. Vorrichtung nach einem der vorhergehenden Ansprüche, **dadurch gekennzeichnet, dass** die erzeugte Frischluft einen Frischlufteinlass (7) der Kabine speist.

## Claims

1. A cool air supply system for supplying an aircraft with air cooled in a heat exchanger (1) swept by a flow of external air, comprising ejector means (13) for circulating said external air in said heat exchanger (1), said ejector means (13) including a nozzle (14) fed with air from a cabin (6) of the aircraft via an air outlet (16) in said cabin (6), and **characterized in that** said external air is taken from a static air inlet (2) of the aircraft.

2. A system according to claim 1, **characterized in that** said heat exchanger (1) and said ejector means (13) are installed in series in a common external air pipe (4) in said aircraft extending from said static air inlet (2) to an outlet (5) to the exterior.

3. A system according to claim 2, **characterized in that** said ejector means (13) are on the upstream side of said heat exchanger (1).

4. A system according to claim 2, **characterized in that** said ejector means (13) are on the downstream side of said heat exchanger (1).

5. A system according to any of claims 1 to 4, **characterized in that** said cabin air outlet (16) is equipped with valve means (19) mobile between a closed position in which cabin air passing through the outlet (16) all enters said ejector means (13) and an open position in which said air passes to the exterior.

6. A system according to claim 5, **characterized in that** said cabin outlet (16) is further equipped with an overpressure valve (17).

7. A system according to claim 6, **characterized in that** it includes a second air outlet (9) in said cabin (6) equipped with an overpressure valve (10).

8. A system according to any one of claims 1 to 7, **characterized in that** said ejector means (13) are fed with cabin air via a pipe (15) equipped with a silencer (20).

9. A system according to any one of claims 5 and 6, **characterized in that** it includes means for closing said valve means (19) when the aircraft is flying at a high altitude to activate said ejector means (13).

10. A system according to any one of claims 1 to 9, **characterized** m that it further includes ventilation means (11, 12) for circulating external air in the heat exchanger (1) when the aircraft is flying at a low altitude or is on the ground.

11. A system according to any one of claims 1 to 10, **characterized in that** said ejector means (13) include a plurality of cabin air nozzles.

12. A system according to any one of the preceding claims, **characterized in that** the cool air produced is fed to a cool air inlet (7) of said cabin.
